(19) **Europäisches Patentamt / European Patent Office / Office européen des brevets**

(11) **EP 1 820 295 B1**

(12) **EUROPEAN PATENT SPECIFICATION**

(45) Date of publication and mention
of the grant of the patent:
**09.07.2008 Bulletin 2008/28**

(51) Int Cl.:
***H04L 9/06*** (2006.01)

(21) Application number: **05789628.4**

(22) Date of filing: **20.09.2005**

(86) International application number:
**PCT/IB2005/003104**

(87) International publication number:
**WO 2006/033013 (30.03.2006 Gazette 2006/13)**

(54) **SUBSTITUTION BOXES**

S-BOXEN

BOITES DE SUBSTITUTION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **24.09.2004 AU 2004905507
16.11.2004 AU 2004906543
30.12.2004 AU 2004907361
31.12.2004 AU 2004907374
29.04.2005 AU 2005902136**

(43) Date of publication of application:
**22.08.2007 Bulletin 2007/34**

(73) Proprietor: **Synaptic Laboratories Limited
Road Town, Tortola (VG)**

(72) Inventor: **O'NEIL, Sean
Lantheuil Calvados (FR)**

(74) Representative: **Miller, James Lionel Woolverton
et al
Kilburn & Strode,
20 Red Lion Street
London WC1R 4PJ (GB)**

(56) References cited:
**US-A- 5 745 577          US-A1- 2002 003 876
US-A1- 2002 027 987**

## Description

### Field of the invention

The present invention relates to the arrangement of substitution boxes, some embodiments of which are efficient in hardware and some embodiments of which are efficient in software.

### Background of the invention

The present application claims priority from our Australian provisional patent applications 2004905507 filed on 24 September 2004, 2004906543 filed on 16 November 2004, 2004907361 filed on 30 December 2004, 2004907374 filed on 31 December 2004, and 2005902136 filed on 29 April 2005.

In this specification, including the claims, the terms:

'comprises' and 'comprising' are used to specify the presence of stated features, integers, steps or components but do not preclude the presence or addition of one or more other features, integers, steps, components; and

'index position' $P_i$ of a bit i is used to indicate the position of bit $i$ within the set of a contiguous input bits.

In this specification the term 'probabilistic process' is used to indicate both 'random' and 'pseudo-random' processes including where the pseudo-random process is either 'keyed' or 'seeded' with a constant or key material, and where the source of randomness and the pseudo-random algorithm are arbitrary. Any known pseudo-random number generator or a stream cipher can be used for this purpose.

A reference in this specification to a published document is not to be taken as an admission that the contents of that document are part of the common general knowledge of the skilled addressee of the present specification.

In order that the inventive features of our invention may be more readily discerned, we set out the following summary of some previously published documents relating to this art.

Definitions of confusion and diffusion were first publicly introduced by C.E. Shannon in his paper 'Communication Theory of Secrecy Systems' in 1949.

Substitution boxes (s-boxes) receive a digitally coded input and convert that input into a differently coded digital output, thus providing confusion. Permutation boxes (p-boxes) receive a digitally coded input and return the same bits as output, unaltered in their values but permuted in order, thus providing diffusion.

The 'Avalanche effect' describes a cryptographic property where in its simplest form a single bit change in the input to the round function results in at least a two bit change in the output. It was introduced as a required characteristic for substitution boxes by Horst Feistel when describing the properties of his cipher in 'Cryptography and Computer Privacy' published in Scientific American Vol. 228, Number 5 dated May 1973. This paper shows that a complete any-to-any substitution could not be achieved for large s-boxes such as 128x128 due to technological limitations. Consequently the non-linear s-boxes were selected of a very small practical size (4x4) to provide partial confusion and partial diffusion and large p-boxes were selected to interconnect the outputs of the s-boxes to provide further diffusion, as defined by Shannon.

The first digital block cipher is widely attributed to Horst Feistel. The block cipher as disclosed in US patent 3,798,359 (Feistel) published 19 March 1974 uses a small 4x4 substitution box in combination with permutation operations performed over 64 or 128 bits. The 4x4 s-boxes were designed to be implemented using combinatorial logic.

S-boxes and p-boxes are used as components of most Feistel-type or so-called Feistel Network ciphers and other cryptographic primitives. They are also used in the public *Data Encryption Standard* (DES) disclosed in the US patent 3,958,081 (Ehrsam, et al.) published 18 May 1976. The DES cipher became a US Federal Standard in 1977. It is noteworthy to highlight that the 6x4 s-boxes were carefully selected to ensure their efficient hardware implementation using combinatorial logic while preserving important cryptographic criteria not known to the public at that time.

Substitution operations of s-boxes are generally not arithmetic. Arithmetic operations such as, but not limited to, addition, multiplication and exponentiation are often used instead of, or in conjunction with non-arithmetic s-boxes. Substitution-permutation networks based on such combination of arithmetic operations and non-arithmetic s-boxes are efficient in word-based processor architectures. An example of this type of construction is described in US patent 4,255,811 (Adler) published 10 March 1981 disclosing a cipher which uses arithmetic addition or subtraction modulo $2^n$, $n$-bit wide XOR, static $n$-bit permutations and $n$-bit key-dependent rotation operations. Additional constructions of similar nature are described in US patent 4,982,429 (Takaragi, et al.) published 1 January 1991 and in US patent 5,103,479 (Takaragi, et al.) published 7 April 1992. Arithmetic word-based non-linear operations are used in cryptographic hash functions such as in the MD5 cryptographic hash function as described in the Recommendation for Comment 1321, April 1992 by Ron Rivest.

There is no significant published research on permutation boxes (p-boxes), which are left at the designer's discretion and in most cases are completely linear or are randomly chosen.

Feistel Network ciphers also include a combining function in their structure which is linear in most cases and which contributes to the diffusion. An example of replacing the linear combiner (XOR) with a non-linear arithmetic operation with a higher diffusion rate can be found in the so-called GOST cipher recommended by the National Soviet Bureau of Standards; Information Processing Systems; Cryptographic Protection; Cryptographic Algorithm. GOST 28147-89, 1989. The GOST cipher is also an example of a cipher using word-based rotation operation to achieve diffusion of bits between s-boxes.

The 'completeness criterion' is first explicitly defined in the paper 'Structured Design of Substitution-Permutation Encryption Networks' published in IEEE Transactions on Computers, Vol. 28, No. 10, 747 in 1979, by John B. Kam and George I. Davida. A cryptographic transformation is 'complete' if each ciphertext bit depends on all of the plaintext bits. A cipher satisfying the completeness criterion is found in the US patent 4,275,265 (Davida, et al.) published 23 June 1981. The completeness criterion requires $MxN$ s-boxes to be of the form such that $N$ instances of $M$-input single-output Boolean functions must each take as input the complete set of $M$ input bits.

In the 1982 paper 'Are Big S-Boxes Best', J. Gordon and H. Retkin explored the cryptographic properties of s-boxes when the contents are chosen as a random permutation of the set of all possible outputs. The paper concluded that preliminary work seemed to show that a variety of desirable cryptographic properties are likely to be found in such a randomly chosen s-box if the number of entries is large enough. For instance less than one in $2^{64}$ randomly generated reversible 6x6 s-boxes would contain an exploitable linearity.

The 1982 paper 'Probabilistic completeness of substitution-permutation encryption networks', IEEE Proceedings, 129(5): 195-199 by F. Ayoub concluded that recent research at the time had shown that, under certain conditions, the substitution function can be designed by a random choice as a proof for their freedom from a deliberate trapdoor. The paper also described that, when the permutation is also selected at random, i.e. user keyed, the resulting network retains, with a very high probability, the completeness property. That is, every output bit is a function of all input bits.

We refer to the above two papers when allowing a random choice of Boolean functions for our $Mx1$ s-boxes.

In the masters thesis 'On the Design of S-Boxes' by A. F. Webster and S. E. Tavares, Department of Electrical Engineering, Queen's University, Kingston, Ont. Canada, published in LNCS no. 218, pp. 523--534 (1986), the authors explicitly define the 'strict avalanche criterion' (SAC). The SAC states that each ciphertext output bit should change with a probability of exactly one half whenever a single input bit is complemented.

This thesis describes the heuristic process used to select 4x4 s-boxes that satisfy the SAC and an additional property 'avalanche variable independence'. The process begins by selecting all the potentially invertible 4x1 functions that satisfy the SAC, and combining them 4 at a time to produce 4x4 substitution boxes. Additional heuristic techniques are described in the thesis, like optimizing the search process by selecting 4x1 Boolean functions from a limited number of families that produced 'perfect' s-boxes in the earlier steps.

This thesis highlighted how the cipher described in US patent 4,275,265 (Davida, et al.) did not meet the SAC and validated a potential weakness in DES that had previously been identified by other researchers. It also highlighted that it may be possible to convert a construction that does not satisfy the SAC into a construction that does satisfy the SAC by iterating the construction over several rounds. It is more likely that this can be achieved where the construction is a substitution permutation network where the permutation wiring is random.

The perfect nonlinearity criterion for s-boxes was first described in the 1989 paper 'Nonlinearity Criteria for Cryptographic Functions.' Advances in Cryptology-EUROCRYPT '89. 549-562; the authors Meier and Staffelbach. The authors state that the perfect nonlinearity criterion affects diffusion, and it is in fact a much stronger requirement than SAC.

The 1992 paper 'On immunity against Biham and Shamir's Differential Cryptanalysis,' Information Processing Letters, vol. 41, Feb. 14, 1992, pp 77-80 by Carlisle M. Adams describes methods of generating practical size s-boxes that are immune to differential cryptanalysis.

US patent 5,796,837 (Kim, et al.) published 18 August 1998 discloses a process for generating practical size $MxN$ s-boxes immune to linear and differential cryptanalysis. US patent 6,031,911 (Adams, et al.) published 29 February 2000 discloses heuristic techniques for generating $MxN$ s-boxes that satisfy SAC and other criteria rapidly in an incremental process (similar to techniques described by A. F. Webster and S. E. Tavares, in the thesis 'On the Design of S-Boxes' referred to above).

From the preceding analysis of published material, we can conclude that the general direction of non-arithmetic s-box research and the generation of non-arithmetic s-boxes is divided between three schools of thought, namely selection of reasonably large s-boxes with all possible outputs randomly permuted, the generation of key-dependent s-boxes from s-boxes that are known to be strong, and finding newer and stricter heuristic criteria for ensuring desirable cryptographic properties for fixed s-boxes. In all cases, the three schools of non-arithmetic s-box generation are in agreement that s-boxes must at a minimum ensure the completeness criterion with high probability.

We note the following properties concerning non-arithmetic s-boxes:

- balanced $Mx1$ Boolean functions for s-box construction can be selected at random;

- *MxN* s-boxes can be built from random balanced *M*x1 Boolean functions and then heuristically improved to satisfy SAC;
- *MxN* s-boxes can be selected by randomly permuting a fixed initial permutation;
- a single round of a cryptographic substitution permutation (SP) network can be built from one or more unique *MxN* s-boxes each of which individually satisfies the SAC while the SP network itself may not satisfy the SAC; and
- while a single round of a cryptographic SP network, as previously described, may not satisfy the SAC, the complete SP network may satisfy the SAC after two or more rounds of iteration;

In every case small practical size s-boxes with ideal characteristics such as the highest achievable non-linearity, the highest achievable algebraic degree and the fastest achievable avalanche are chosen for a substitution-permutation network to approximate an otherwise technologically impossible large strong s-box.

In software or in word-based processor architectures the primitive Boolean logic operations (AND, MOV - move/ copy, NAND, NOR, NOT, OR, XNOR, XOR, etc.) are a form of a single-instruction-multiple-data (SIMD) operation executed over strictly structured parallel *N*-bit wide inputs. For instance if we consider a 32-bit general purpose processor such as the IBM Power PC or Intel x86 architecture, the Boolean AND instruction performs 32 individual bitwise AND operations on the 64 bits of input supplied in 32-bit wide register blocks, releasing 32 bits of output.

All *MxN* s-boxes and *M*x1 Boolean functions are implemented in software either as look-up tables or through a suitable selection and arrangement of the primitive SIMD operations. An example of SIMD operation use in cryptography implementing 32 concurrent software efficient two-to-one multiplexers is found in the cryptographic hash function MD5.

The most distinct characteristic of SIMD instructions is their strict parallelism: each bit of each input register only affects the bit in the same position in the output - the least significant bit of each input register only affects the least significant bit of the output, the most significant bit of each input register only affects the most significant bit of the output, etc. Such operations when iterated or grouped together without use of (fixed or variable) rotation, byte swapping or other (fixed or variable) permutation, substitution or arithmetic operations do not allow each of the output bits to be affected by more than one bit of each of the *N*-bit wide input registers. Therefore fixed or variable rotation, byte swapping or other (fixed or variable) bitwise permutation, bitwise substitution or arithmetic operations are required to introduce the diffusion between different bits of each input register which is essential for cryptographic applications.

The following techniques are used in word-based architectures to perform bitwise permutation operations required to introduce bit diffusion:

- p-boxes, usually implemented as look-up tables and combined with s-boxes;
- fixed bitwise rotation operations as found in GOST standard 28147-89, published in 1989;
- key-dependent bitwise rotation operations as disclosed in the above-referenced US patent 4,255,811 (Adler) published 10 March 1981;
- data-dependent rotation operations as disclosed in US Patent 4,157,454 (Becker) published 5 June 1979;
- bitwise masking AND operations combined with bitwise rotation operations and with combining operations such as OR, XOR, or ADD operations as disclosed in US patent 4,888,798 (Earnest) published 19 December 1989, and in US patent 5,168,521 (Delaporte, et al.) published 1 December 1992;
- permutation instructions such as Group Operations proposed in '*On pennutation operations in cipher design*' by Ruby B. Lee, Z. J. Shi, Y.L. Yin, Ronald L. Rivest, M. J. B. Robshaw, such as PPERM and CROSS operations described in the paper 'Efficient permutation instructions for fast software cryptography'. IEEE Micro, 21(6):56-69, December 2001 by R.B Lee et al, or such as BFLY operations described in 'Arbitrary bit permutations in one or two cycles' in the Proceedings of the 15th International Conference on Application-Specific Systems, Architectures and Processors, pages 237-247, June 2003 by Z. Shi et al.;
- word-based arithmetic operations (ADD, SUB, MUL, DIV) as found in GOST standard 28147-89, published in 1989;
- and the less common byte-swapping, word-swapping and bit order reversal operations;

Static bitwise permutation and expansion operations as described in the above patents are implemented in hardware directly as wiring permutations without use of additional logic circuitry regardless of their proposed or intended software implementation. Dynamic bitwise permutation operations including s-boxes, arithmetic operations and data-dependent and key-dependent (for arbitrarily chosen keys) rotations and permutations are implemented in hardware either as through use of Boolean logic or as look-up tables.

Bit slicing as described by Eli Biham in the paper *A Fast New DES Implementation in Software*, published 1997 results in multiple cipher instances executed in parallel using only the primitive AND, OR, XOR, NOT Boolean logic functions and move operations. As we have shown above, bit slicing does not create interrelationships between the thirty two or sixty four different cipher instances. Bit slicing allows for faster parallelised software implementations using direct references to different *N*-bit wide registers in place of bitwise permutations within a single processor register. Bit slicing increases the sequential execution latency time to implement a single cipher, but making up for the reduced performance in volume.

Heuristic algorithms (some times also called approximation algorithms) are probabilistic algorithms that quickly find a good solution to an otherwise intractable problem. Such a solution may or may not be optimal, but is considered acceptable for intractable problems for which finding a good solution or proving that any given solution is in fact optimal is computationally infeasible. Any of the following heuristic algorithms can be readily applied to improve randomly or pseudo-randomly chosen wiring permutations or Boolean functions used in the preferred embodiments of the current invention judged by certain cryptographic criteria used as a measure of quality: Genetic algorithms, Greedy algorithms, Random Search, Tabu Search, Hill Climbing, Ant Colony Optimization, Simulated Annealing or their hybrids and parallel variants. Suitable algorithms are described in:

Approximation Algorithms by Vijay V. Vazirani, Springer-Verlag, Heidelberg, 2001, ISBN: 3-540-65367-8.

Approximation Algorithms for NP-hard Problems by D.S. Hochbaum, PWS Publishing Co, Boston, 1996, ISBN: 0-534-94968-1.

Automated Cryptanalysis of Substitution Ciphers by W.S. Forsyth and R. Safavi-Naini, published in Cryptologia vol XVII, No 4, 1993, pages 407-418

Automated Cryptanalysis of Transposition Ciphers by J.P. Giddy and R. Safavi-Naini, published in The Computer Journal vol XVII, No 4, 1994.

Two-Stage Optimisation in the Design of Boolean Functions by John Andrew Clark and Jeremy Jacob, published in Lecture Notes in Computer Science 1841 Springer 2000, ISBN: 3-540-67742-9, pages 242-254.

## Summary of the invention

In contrast, according to one aspect the present invention provides a multiple-input multiple-output s-box which is adapted:

to receive $a$ contiguously numbered input bits $I_1$, $I_2$ to $I_a$, where a is at least 4, and
to output $b$ contiguously numbered output bits $O_1$, $O_2$, to $O_b$,

the s-box comprising:

$c$ primitive s-boxes $sb_1$, $sb_2$ to $sb_c$, each of which:

has a multiple-input single-output Boolean function $f_1$, $f_2$, to $f_c$ defining the relationship between the multiple inputs and the single output; and
is adapted to receive a set of input bits $s_1$, $s_2$, to $s_c$ respectively, each such set chosen from the $a$ input bits to the s-box and containing $sl_1$, $sl_2$, to $sl_c$ bits respectively, so that:

each of the numbers $sl_1$, $sl_2$, to $sl_c$ is in the range of 3 to $(a-1)$; and
the sum of the numbers $sl_1$, $sl_2$, to $sl_c$ is larger than $a$,

and in which the $b$ output bits of the s-box comprise the outputs of the $c$ Boolean functions.

According to another aspect, the present invention provides a cryptographic process which:

receives $a$ contiguously numbered input bits $I_1$, $I_2$ to $I_a$, where $a$ is at least 4, and
outputs $b$ contiguously numbered output bits $O_1$, $O_2$, to $O_b$, the process comprising:

$c$ primitive s-box operations $sb_1$, $sb_2$ to $sb_c$, each of which:

has a multiple-input single-output Boolean function $f_1$, $f_2$, to $f_c$ defining the relationship between the multiple inputs and the single output; and
is receives a set of input bits $s_1$, $s_2$, to $s_c$ respectively, each such set chosen from the $a$ input bits to the cryptographic function and
containing $sl_1$, $sl_2$, to $sl_c$ bits respectively, so that:

each of the numbers $sl_1$, $sl_2$, to $sl_c$ is in the range of 3 to ($a$-1); and
the sum of the numbers $sl_1$, $sl_2$, to $sl_c$ is larger than $a$,

and in which the $b$ output bits of the cryptographic function comprise the outputs of the $c$ Boolean functions.

**Brief description of the drawings**

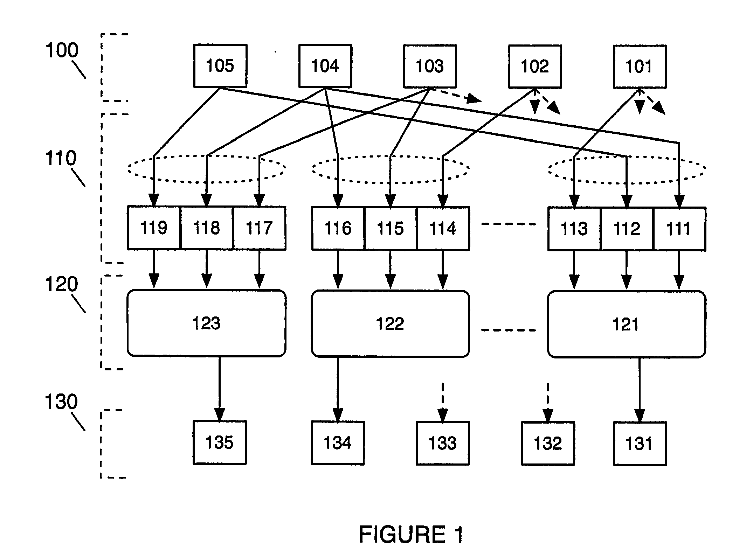

In order that the present invention may be more readily understood, preferred embodiments of it are described by reference to the drawings in which figures 1, 2, 3 and 4 illustrate processes according to preferred embodiments of the present invention.

**Descriptions of preferred embodiments of the invention**

Figure 1 illustrates a portion of a key-and-data-dependent substitution-permutation network cipher according to a preferred embodiment of the invention. Figure 1 can be implemented in hardware directly as a circuit or simulated on a word-based architecture as shown below.

The input 100 of the embodiment illustrated on figure 1 consists of five bits, 101, 102, 103,104 and 105. The function 110 illustrates a static expansion of the input 100 by a factor of 3 which also serves as a permutation of the input bits. The function 120 contains five instances of 3x1 substitution boxes, only three of which (121,122 and 123) are shown in figure 1. The output 130 consists of five bits, 131, 132, 133, 134 and 135. The 3x1 s-box 123 takes a unique set of three inputs from input 100, namely the bit 105 and the cyclic next two bits 104 and 103, generating a single bit output 135. The 3x1 s-box 122 takes a unique set of three input bits from the input 100, namely the bit 104 and the cyclic next two bits 103 and 102, generating a single bit output 134. The 3x1 s-box 121 takes a unique set of three input bits from the input 100, namely the bit 101 and the cyclic next two bits 105 and 104, generating a single-bit output 131. Each of the bits of the output 130 is produced by a 3x1 s-box, where each s-box receives a set of three input bits from input 100, where each of the five sets of three input bits has no more than two bits in common with any other of the five sets of three input bits.

Individually each of the plurality of s-box functions indicated by reference number 120 consists of a non-linear three-input single-output Boolean function. In the preferred embodiment illustrated in figure 1 each of the plurality of s-box functions indicated by reference number 120 performs a unique three-input single-output balanced non-linear Boolean function.

The preferred embodiment of the current invention illustrated on figure 1 has reduced wiring redundancy compared with traditional $M$x$N$ substitution boxes: each of the $L$-to-1 Boolean functions in the region indicated by reference number 120 has less than $L$ inputs in common with any other $L$-to-1 Boolean function in region 120. In contrast all traditional $M$x$N$ substitution boxes must have full wire redundancy in order to satisfy the completeness criterion: the complete $M$-to-1 Boolean function for every output bit must share all its $M$ inputs with all other $M$-to-1 Boolean functions in the s-box.

For the purpose of illustration the s-boxes 123, 122 and 121 are chosen to be two-to-one multiplexer functions where bits 119, 116 and 113 are the selector inputs for each multiplexer taking the sets of bits {118, 117}, {115,114} and {112, 111} respectively as data inputs. Both the select and the data inputs to the s-boxes 120 are drawn from the input 100, and the s-boxes 120 are a form of data-dependent permutation.

In this way the embodiment of the invention that is illustrated in figure 1 includes a plurality of input bit expansion-permutation, multiplexer functions, and output bit permutation. It achieves a predetermined 1-to-$L$ expansion of input 100, a predetermined bitwise permutation of the expanded intermediate state 110 and a key-and-data-dependent substitution 120 achieving a $L$-to-1 compression of the expanded intermediate state 110 returning state 130 as output.

If the output 130 is fed back into the input 100, we would describe such a construction as 'a non-linear shift register with parallel feedback' or 'a parallel feedback NLFSR'. In a preferred embodiment of the current invention the output of 130 is fed back as input 100. The influence of bits flows cyclically to the left due to the dependency of each bit of the output 130 on the two cyclic bits to the right. In this example it takes a minimum of two rounds to achieve the required diffusion completeness.

We note that the critical path wire latencies for each of the bits of output 130 are expected to be roughly uniform in a circuit implementing the process. In contrast with the current invention, circuits implementing substitution boxes based on arithmetic operations always exhibit strongly non-uniform critical path wire latencies dependent on the most significant bit of a chain of carry operations.

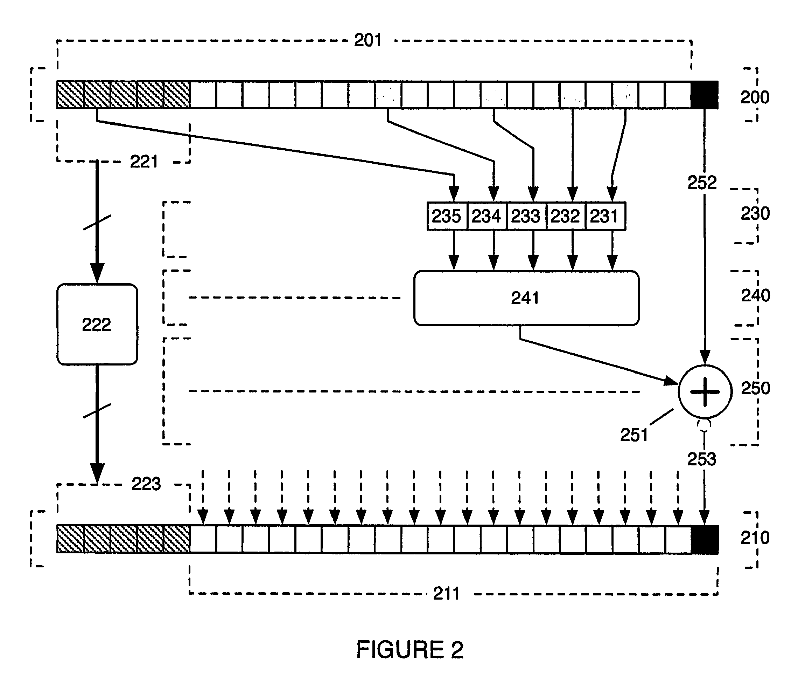

Figure 2 illustrates a portion of the bijective variant of a key-and-data-dependent substitution-permutation network cipher process according to another preferred embodiment of the current invention. The region 200 identifies 25 bits of input. The region 201 identifies twenty-four bits to the left of input 252. The region 210 identifies twenty-five bits of output. Region 211 identifies 20 bits of output dependent on twenty five-to-one s-boxes as illustrated in region 240. (It will be appreciated that only one of those twenty s-boxes, the s-box indicated by reference numeral 241, is illustrated in the figure.) Region 221 illustrates five bits of the input. Region 223 illustrates five bits of the output dependent on a bijective (reversible) 5x5 substitution-permutation 222 of the five input bits 221.

Each multiple-input single-output Boolean function 241 in region 240 takes as input a predetermined set 230 of five bits such as 231, 232, 233, 234 and 235 from region 201 generating as output the first input bit to the linear combiner (XOR/XNOR) 251 in 250 generating bit 253 as output. Input bit 252 is the second of the two inputs into 251. For each of the linear combiners 251 in the region 250, the corresponding Boolean function in the region 240 must receive inputs only from the region to the left of the second input bit into the combiner, which region is marked on the illustration as 201.

In the preferred embodiment of the current invention illustrated on figure 2, the primitive five-to-one s-boxes 241 used in the step illustrated by region 240 consist of five inputs 221 through 235 used in the step illustrated by region 230, a single output and a five-to-one Boolean function defining the relationship between the input bits and the output bit, and each balanced non-linear Boolean function 241 is chosen at random.

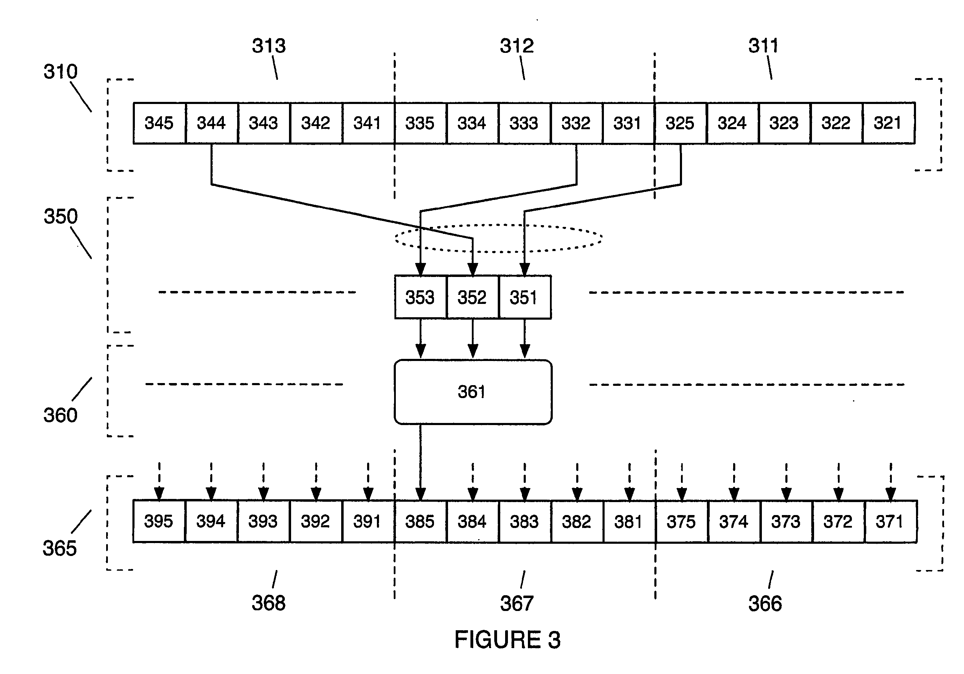

Figure 3 illustrates a portion of a word-based key-and-data-dependent substitution-permutation network according to a preferred embodiment of the invention. The data state 310 is fifteen bits wide partitioned into three words (or blocks, sub-blocks or registers, depending on the notation most convenient). Word 311 consists of five bits 321, 322, 323, 324 and 325; word 312 consists of five bits 331, 332, 333, 334 and 335; and word 313 consists of five bits 341, 342, 343, 344 and 345.

The region 350 illustrates a static expansion permutation by a factor of 3 for the data state. The region 360 illustrates 3x1 non-linear substitution box functions (only one of which is illustrated in the drawing).

The data state 365 is fifteen bits partitioned into three words. Word 366 consists of five bits 371, 372, 373, 374 and 375; word 367 consists of five bits 381, 382, 383, 384 and 385; and word 368 consists of five bits 391, 392, 393, 394 and 395.

The illustrated 3x1 substitution function 361 takes a unique set of three inputs, consisting of one bit 352 originating from bit 344 of word 313, one bit 353 originating from bit 332 of word 312, and one bit 351 originating from bit 325 of word 311. The illustrated s-box 361 generates a single bit of output 385 in word 367.

For all fifteen bits of the state 365 each of the 3x1 s-boxes in 360 exhibit a unique set of four inputs according to the above template.

The word-based key-and-data-dependent substitution-permutation network cipher according to a preferred embodiment of the invention illustrated in figure 3 provides a direct mechanism for improvement of the cipher's software performance.

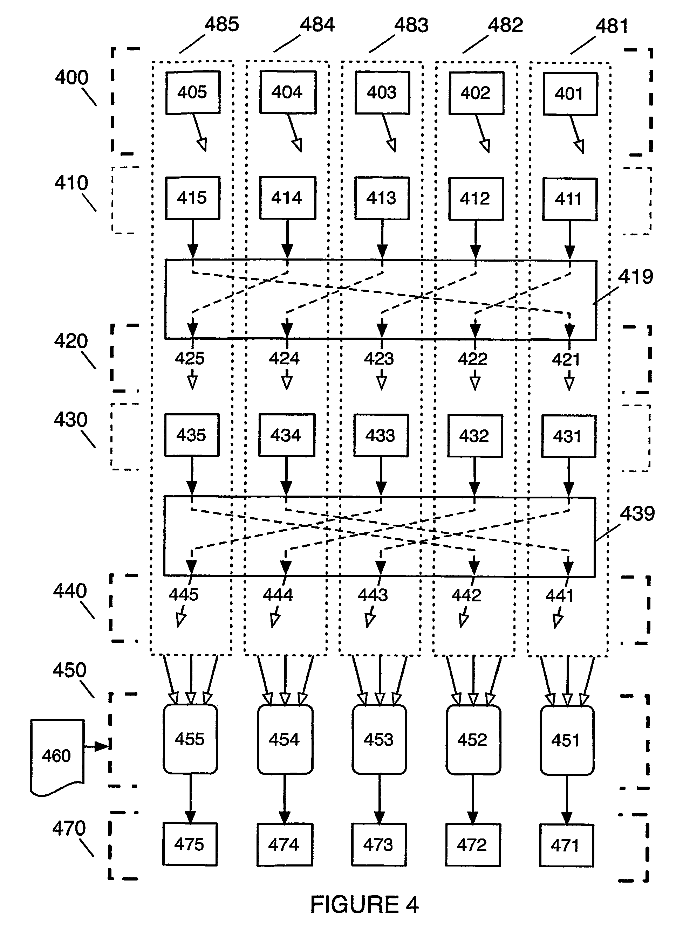

Figure 4 illustrates an example of a software implementation of the cipher illustrated in figure 1 according to a preferred embodiment of the invention. The process of figure 4 is executed on a processor with a word length of five bits. Word 400 consists of five bits 401, 402, 403, 404 and 405; word 410 consists of five bits 411, 412, 413, 414, and 415; word 430 consists of five bits 431, 432, 433, 434 and 435; and word 470 consists of five bits 471, 472, 473, 474 and 475. Word 400 is expanded to three words through duplication into word 410, and 430.

Word 410 is statically permuted using a cyclic rotation 419 towards the most significant bit by one bit. In this way bits 411, 412, 413, 414 and 415 are permuted as output 422, 423, 424, 425 and 421 respectively. The output bits 421 through 425 are used as a single-word input to 450.

Word 430 is statically permuted using a cyclic rotation 439 towards the most significant bit by two bits. In this way bit 431, 432, 433, 434 and 435 are permuted as output 443, 444, 445, 441 and 442 respectively. The output bits 441 through 445 are used as a single-word input to 450.

The region 450 identifies a function taking three words of input performing a sequence of word-based instructions 460 consisting of word based primitive Boolean functions implementing the multiplexer operations illustrated on figure 1. If we label word 400 as A, word 420 as B, word 440 as C and word 470 as D we can express the five bit wide 2-to-1 multiplexer, where A consists of the select inputs, and B and C consist of the data inputs as follows:

$$D = (A \text{ AND } B) \text{ OR } ((\text{NOT } A) \text{ AND } C)$$

Region 481 visually illustrates how bit 471 depends only on the inputs 401, 421 and 441.

Regions 482 through 485 illustrate the dependencies for bits 472 through 475 respectively.

If we were to describe the complete five bit wide implementation of the process in terms of five-bit variables A and D:

## D = (A AND (A ROT 1)) OR ((NOT A) AND (A ROT 2))

In assembler pseudo code where general purpose five-bit registers RA is the input, RB and RC are temporary registers and RD is output, the same algorithm can be trivially implemented in six operations as follows:

RB = RA rotate left 1

RC = RA and RB

RA = not RA

RB = RB rotate left 1

RD = RA and RB

RD = RD or RC

The above process illustrates how the permutation operations can be cascaded and move / duplications operations can be optimized away without loss of generality. Other operations such as byte-swapping, look-up tables and binary masking operations are readily available in software processors allowing the technician to implement a wide range of wiring permutations which can be expressed with a short sequence of processor instructions thus achieving the required software performance without degrading hardware performance.

In the preferred embodiments of the current invention illustrated on figures 1, 2 and 3 the internal wiring permutations which include assignments of all the input bits 100, 201 and 310 to the expanded input bits 110, 240 and 350 respectively, as well as the assignment of all the output bits from the plurality of primitive $L$-to-1 s-boxes in 120, 240 and 360 to all the output bits in 130, 210 and 365 respectively, is chosen at random.

In other preferred embodiments of the current invention:

- the internal wiring permutation is chosen using a key-dependent pseudo-random process;
- the internal wiring permutation is selected according to a mathematical formula;
- the internal wiring permutation is heuristically refined to reduce redundancy in the single-round or multiple-round polynomial relationships between input and output bits;
- the internal wiring permutation is limited according to the maximum allowed wiring latency for hardware circuit optimization;
- inputs to 121, 122, 123, 241 and 361 are limited in distance from the outputs 131, 134, 135, 253 and 385 respectively;
- inputs to each primitive $L$-to-1 s-box in regions 120, 240 and 360 are selected from the same relative positions of input bits in regions 100, 201 and 310 regarding each output bit in regions 130, 210 and 365 respectively;
- some of the primitive $L$-to-1 s-boxes in regions 120, 240 or 360 are adapted to receive one or a plurality of key bits as inputs;
- a different wiring permutation is chosen for each round of the cipher operation
- width of the output 130, 210 or 365 is different from the width of the input 100, 200 or 310 respectively;
- the internal wiring permutations are limited to permutations which can be implemented as a short sequence of 32-bit, 64-bit or 128-bit general purpose processor instructions;
- the internal wiring permutations are adapted to incorporate byte-swapping and rotation sequencing as found in our co-pending Australian provisional patent application 2004905897, filed 13 October 2004, entitled *Process of and Apparatus for Encoding a digital signal;*
- a single Boolean function is used for all primitive $L$-to-1 s-boxes in regions 120, 240 or 360;
- a plurality of Boolean functions is used for the primitive $L$-to-1 s-boxes in regions 120, 240 or 360;
- all Boolean functions used for the primitive $L$-to-1 s-boxes in regions 120, 240 or 360 are different;
- some of the Boolean functions used for the primitive $L$-to-1 s-boxes in regions 120, 240 or 360 are chosen using a key-dependent pseudo-random process;
- the choice of Boolean functions used for the primitive $L$-to-1 s-boxes in regions 120, 240 or 360 is heuristically refined to reduce redundancy in the single-round or multiple-round polynomial relationships between input and output bits;
- only the original input variables (or processor registers) are used in the subsequent operations;

- at least one or a plurality of the intermediate variables (or processor registers) are used in the subsequent operations;
- only the intermediate variables (or processor registers) are used in the subsequent operations.
- the method of applying s-boxes is also adapted to incorporate bidirectional block chaining as found in our co-pending patent applications:

   Australian provisional applications 2004906364 filed on 5 November 2004 and 2005900087 filed on 10 January 2005, both entitled A *Method of Encoding a Signal*;
   International Patent Application PCT/IB2005/001499 filed on 10 May 2005 and entitled *Methods of Encoding and Decoding Data*;
   International Patent Application PCT/IB2005/001487 filed on 10 May 2005 and entitled *Process of and Apparatus for Encoding a Signal*; and
   International Patent Application PCT/IB2005/001475 filed on 10 May 2005 and entitled A *Method of and Apparatus for Encoding a Signal in a Hashing Primitive*.

If choice of wiring permutations and/or Boolean functions used in the preferred embodiments of the current invention depend on the key material called a 'family' key, the hardware (RFID, ASIC etc.) implementation of such a cipher remains efficient when implemented as fixed wiring with fixed primitive Boolean logic.

Importantly, the unique limitation of choice of input bits to the primitive $L$-to-1 s-boxes 201 only to bits to the left of 252, combined with the linear relationship between the input bit 252 and the output bit 253, operating as shown on figure 2, ensures bijective (reversible) operation regardless of the choice of Boolean function in 241 or the internal wiring permutation.

## Claims

1. A multiple-input multiple-output s-box which is adapted:

   to receive $a$ contiguously numbered input bits $I_1$, $I_2$ to $I_a$, where $a$ is at least 4, and
   to output $b$ contiguously numbered output bits $O_1$, $O_2$, to $O_b$,

   the s-box comprising:

   $c$ primitive s-boxes $sb_1$, $sb_2$ to $sb_c$, each of which:

      has a multiple-input single-output Boolean function $f_1$, $f_2$, to $f_c$ defining the relationship between the multiple inputs and the single output; and
      is adapted to receive a set of input bits $s_1$, $s_2$, to $s_c$ respectively, each such set chosen from the $a$ input bits to the s-box and containing $sl_1$, $sl_2$, to $sl_c$ bits respectively, so that:

         each of the numbers $sl_1$, $sl_2$, to $sl_c$ is in the range of 3 to ($a$-1); and
         the sum of the numbers $sl_1$, $sl_2$, to $sl_c$ is larger than $a$,

   and in which the $b$ output bits of the s-box comprise the outputs of the c Boolean functions.

2. A multiple-input multiple-output s-box as claimed in any one of the preceding claims, in which the $b$ output bits of the s-box are the outputs of the c primitive s-boxes.

3. A multiple-input multiple-output s-box as claimed in claim 1, in which $a$ is at least 16.

4. A multiple-input multiple-output s-box as claimed in claim 1, in which b is at least 16.

5. A multiple-input multiple-output s-box as claimed in claim 1 in which c is in the range of 12 to $b$ inclusive.

6. A multiple-input multiple-output s-box as claimed in claim 1, in which for each $i$ and $j$ from 1 to $a$, each pair of sets $s_i$ and $s_j$ have no more than min($sl_i$, $sl_j$)-1 bits in common.

7. A multiple-input multiple-output s-box as claimed claim 1, in which at least two of the numbers $sl_1$, $sl_2$, to $sl_c$ are the same.

**8.** A multiple-input multiple-output s-box as claimed in claim 7, in which all of the numbers $sl_1$, $sl_2$, to $sl_c$ are the same.

**9.** A multiple-input multiple-output s-box as claimed in claim 1, in which each set $s_1$, $s_2$, to $s_c$ of input bits is selected using a probabilistic process.

**10.** A multiple-input multiple-output s-box as claimed in claim 1, in which at least one of the Boolean functions $f_1$, $f_2$, to $f_c$ is generated using a probabilistic process.

**11.** A multiple-input multiple-output s-box as claimed in claim 1, in which each of the functions $f_1$, $f_2$, to $f_c$ comprises a two-to-one multiplexer function.

**12.** A multiple-input multiple-output s-box as claimed in claim 1, in which each of the functions $f_1$, $f_2$, to $f_c$ is a unique Boolean function.

**13.** A multiple-input multiple-output s-box as claimed in claim 12, in which the difference between functions $f_1$, $f_2$, to $f_c$ is affine.

**14.** A multiple-input multiple-output s-box as claimed in claim 1, in which for every $i$ from ($c$-$a$) to $a$:

the set of $sl_i$ input bits to each primitive s-box $sb_i$ is chosen from the input bits $I_1$ to $I_i$; and
the relationship between the input bit $I_i$ and the output bit is linear.

**15.** A multiple-input multiple-output s-box as claimed in claim 14 in which a sub-set of $T$=($a$-$c$) bits of the set of $a$ bits $I_1$ to $I_a$, being the bits $I_1$, to $I_T$, are input to a $T$x$T$ bijective mapping.

**16.** A multiple-input multiple-output s-box as claimed in claim 1, in which for every $i$ from ($W$+1) to $a$, where $W$ is a constant:

the set of $sl_i$ input bits to the primitive s-box $sb_i$ is chosen from the input bits $I_{(i-w)}$ to $I_i$; and
the relationship between the input bit $I_i$ and the output bit of the s-box $sb_i$ is linear.

**17.** A multiple-input multiple-output s-box as claimed in claim 1, in which in selecting the $sl_1$, $sl_2$, to $sl_c$ of input bits of the sets of input bits $s_1$, $s_2$, to $s_c$ respectively:

in the contiguously numbered set of input bits $I_1$, $I_2$ to $I_a$, the bit $I_a$ is treated as being contiguous with the bit $I_1$ as well as with the bit $I_{(a-1)}$ so that the input bits $I_1$, $I_2$ to $I_a$, are considered as being a circular collection of bits; the contiguously numbered set of input bits $I_1$, $I_2$ to $I_a$ is considered as comprising a set of windows of bits $w_1$ to $w_d$, where $d$ is in the range of 3 to (c/3) such that:

each window has leading and trailing window boundaries each of which boundaries increments by one bit position in the same direction between primitive s-boxes $sb_i$ and $sb_{i+1}$; and

in the contiguously numbered set of output bits $O_1$, $O_2$, to $O_b$, the bit $O_b$ is treated as being contiguous with the bit $O_1$ as well as with the bit $O_{b-1}$ so that the output bits $O_1$, $O_2$, to $O_b$, are considered as being a circular collection of bits; and
for each primitive s-box $sb_k$ in the set $sb_1$ to $sb_c$:

the input bits into the primitive s-box $sb_k$ comprise at least one bit from each of the at least two windows of input bits other than window $w_k$.

**18.** A multiple-input multiple-output s-box as claimed in claim 17, in which for each primitive s-box $sb_i$ at least two of the windows $w_1$ to $w_d$, are of different sizes.

**19.** A multiple-input multiple-output s-box as claimed in claim 1, in which in selecting the $sl_1$, $sl_2$, to $sl_c$ of input bits of the sets of input bits $s_1$, $s_2$, to $s_c$ respectively:

in the contiguously numbered set of input bits $I_1$, $I_2$ to $I_a$, the bit $I_a$ is treated as being contiguous with the bit $I_1$ as well as with the bit $I_{a-1}$ so that the input bits $I_1$, $I_2$ to $I_a$, are considered as being a circular collection of bits; the contiguously numbered set of input bits $I_1$, $I_2$ to $I_a$ is considered as comprising a set of contiguous windows

of input bits $w_1$ to $w_d$, where $d$ is in the range of 2 to (a/3);

in the contiguously numbered set of output bits $O_1$, $O_2$, to $O_b$, the bit $O_b$ is treated as being contiguous with the bit $O_1$ as well as with the bit $O_{(b-1)}$ so that the output bits $O_1$, $O_2$, to $O_b$, are considered as being a circular collection of bits; and

the contiguously numbered set of output bits $O_1$, $O_2$, to $O_b$ is considered as comprising a set of contiguous windows of output bits $w_1$ to $w_d$; and

for each primitive s-box $sb_k$ of the $sb_1$ to $sb_c$ primitive s-boxes:

the window of output bits $w_k$ comprises the output bit of that primitive s-box $sb_k$; and

the input bits into the primitive s-box $sb_k$ comprise at least one bit from each of at least two windows of input bits other than window $w_k$.

**20.** A multiple-input multiple-output s-box as claimed in any one of claim 1, in which the sets of input bits $s_1$, $s_2$, to $s_c$ to the $c$ primitive s-boxes $sb_1$ to $sb_c$ are chosen by a heuristic process comprising:

probabilistically selecting $c$ ordered sets $P_1$ to $P_c$ of index positions for input bits drawn from $a$ bits, each set $P_1$ to $P_c$ respectively containing $sl_1$, $sl_2$, to $sl_c$ members;

for each of the $c$ ordered sets $P_1$ to $P_c$ of index positions, if any two such sets contain the same member in the same position, swapping one of those members with an index position that is probabilistically chosen from another of the sets $P_1$ to $P_c$;

iteratively for each of the $c$ sets $P_1$ to $P_c$ of index positions:

determining the number of members that the set has in common with each of the other $P_1$ to $P_c$ sets of index positions;

for each two members $P_i$ and $P_k$ of the c sets $P_1$ to $P_c$ of index positions that have an arbitrary number t of members in common, rearranging $(t + 1)/2$ members of $P_i$ by:

sorting the remaining $(c$-2) sets of the $c$ sets $P_1$ to $P_c$ into the order of the number of members that they have in common with $P_i$;

choosing a set $P_m$ from the $(c$-2) sets that has the minimum number of its members in common with $P_i$;

selecting one member that is common to the sets $P_i$ and $P_k$; and

swapping that selected member with one of the members of the set $P_m$.

**21.** A circuit comprising a round function of a block cipher, stream cipher, pseudo-random number generator or hash function, the cryptographic circuit comprising at least one multiple-input multiple-output substitution box as claimed in claim 1, in which circuit there is an unbroken arithmetic carry-logic chain of the range zero up to and including 6 carry operations between the input and the output of the at least one multiple-input multiple-output s-box.

**22.** A cryptographic process which:

receives $a$ contiguously numbered input bits $I_1$, $I_2$ to $I_a$, where $a$ is at least 4, and

outputs $b$ contiguously numbered output bits $O_1$, $O_2$, to $O_b$,

the process comprising:

$c$ primitive s-box operations $sb_1$, $sb_2$ to $sb_c$, each of which:

has a multiple-input single-output Boolean function $f_1, f_2$, to $f_c$ defining the relationship between the multiple inputs and the single output; and

receives a set of input bits $s_1$, $s_2$, to $s_c$ respectively, each such set chosen from the $a$ input bits to the cryptographic process and containing $sl_1$, $sl_2$, to $sl_c$ bits respectively, so that:

each of the numbers $sl_1$, $sl_2$, to $sl_c$ is in the range of 3 to ($a$-1); and

the sum of the numbers $sl_1$, $sl_2$, to $sl_c$ is larger than $a$,

and in which the $b$ output bits of the cryptographic process comprise the outputs of the $c$ Boolean functions.

**23.** A cryptographic process as claimed in claim 22, in which the $b$ output bits of the s-box are the outputs of the $c$ primitive s-box operations.

**24.** A cryptographic process as claimed in claim 22, in which $a$ is at least 16.

**25.** A cryptographic process as claimed in of claim 22, in which $b$ is at least 16.

**26.** A cryptographic process as claimed in claim 22, in which $c$ is in the range of 12 to $b$ inclusive.

**27.** A cryptographic process as claimed in claim 22, in which for each $i$ and $j$ from 1 to $a$, each pair of sets $s_i$ and $s_j$ have no more than $\min(sl_i, sl_j)$-1 bits in common.

**28.** A cryptographic process as claimed in claim 22, in which at least two of the numbers $sl_1$, $sl_2$, to $sl_c$ are the same.

**29.** A cryptographic process as claimed in claim 28, in which all of the numbers $sl_1$, $sl_2$, to $sl_c$ are the same.

**30.** A cryptographic process as claimed in claim 22, in which each set $s_1$, $s_2$, to $s_c$ of input bits is selected using a probabilistic process.

**31.** A cryptographic process as claimed in claim 22, in which at least one of the Boolean functions $f_1, f_2$, to $f_c$ is generated using a probabilistic process.

**32.** A cryptographic process as claimed in claim 22 in which each of the functions $f_1$, $f_2$, to $f_c$ comprises a two-to-one multiplexer function.

**33.** A cryptographic process as claimed in claim 22 in which each of the functions $f_1$, $f_2$, to $f_c$ is a unique Boolean function.

**34.** A cryptographic process -box as claimed in claim 22, in which the difference between functions $f_1, f_2$, to $f_c$ is affine.

**35.** A cryptographic process as claimed in claim 22, in which for every $i$ from ($c$-$a$) to $a$:

the set of $sl_i$ input bits to each primitive s-box operation $sb_i$ is chosen from the input bits $I_1$ to $I_i$; and
the relationship between the input bit $I_i$ and the output bit is linear.

**36.** A cryptographic process as claimed in claim 35 in which a sub-set of $T$=($a$-$c$) bits of the set of $a$ bits $I_1$ to $I_a$, being the bits $I_1$, to $I_T$, are input to a $T \times T$ bijective mapping.

**37.** A cryptographic process as claimed in claim 22, in which for every $i$ from ($W$+1) to $a$, where $W$ is a constant:

the set of $sl_i$ input bits to the primitive s-box operation $sb_i$ is chosen from the input bits $I_{(i-w)}$ to $I_i$; and
the relationship between the input bit $I_i$ and the output bit of the s-box $sb_i$ is linear.

**38.** A cryptographic process as claimed in claim 22, in which in selecting the $sl_1$, $sl_2$, to $sl_c$ of input bits of the sets of input bits $s_1$, $s_2$, to $s_c$ respectively:

in the contiguously numbered set of input bits $I_1$, $I_2$ to $I_a$, the bit $I_a$ is treated as being contiguous with the bit $I_1$ as well as with the bit $I_{(a-1)}$ so that the input bits $I_1$, $I_2$ to $I_a$, are considered as being a circular collection of bits; the contiguously numbered set of input bits $I_1$, $I_2$ to $I_a$ is considered as comprising a set of windows of bits $w_1$ to $w_d$, where $d$ is in the range of 3 to ($c$/3) such that:

each window has leading and trailing window boundaries each of which boundaries increments by one bit position in the same direction between primitive s-box operations $sb_i$ and $sb_{i+1}$; and

in the contiguously numbered set of output bits $O_1$, $O_2$, to $O_b$, the bit $O_b$ is treated as being contiguous with the bit $O_1$ as well as with the bit $O_{b-1}$ so that the output bits $O_1$, $O_2$, to $O_b$, are considered as being a circular collection of bits; and
for each primitive s-box operation $sb_k$ in the set $sb_l$ to $sb_c$:

the input bits into the primitive s-box operation $sb_k$ comprise at least one bit from each of the at least two windows of input bits other than window $w_k$.

39. A cryptographic process as claimed in claim 38, in which for each primitive s-box operation $sb_i$ at least two of the windows $w_1$ to $w_d$, are of different sizes.

40. A cryptographic process as claimed in claim 22, in which in selecting the $sl_1$, $sl_2$, to $sl_c$ of input bits of the sets of input bits $s_1$, $s_2$, to $s_c$ respectively:

in the contiguously numbered set of input bits $I_1$, $I_2$ to $I_a$, the bit $I_a$ is treated as being contiguous with the bit $I_1$ as well as with the bit $I_{a-1}$ so that the input bits $I_1$, $I_2$ to $I_a$, are considered as being a circular collection of bits; the contiguously numbered set of input bits $I_1$, $I_2$ to $I_a$ is considered as comprising a set of contiguous windows of input bits $w_1$ to $w_d$, where d is in the range of 2 to ($a$/3); in the contiguously numbered set of output bits $O_1$, $O_2$, to $O_b$, the bit $O_b$ is treated as being contiguous with the bit $O_1$ as well as with the bit $O_{(b-1)}$ so that the output bits $O_1$, $O_2$, to $O_b$, are considered as being a circular collection of bits; and the contiguously numbered set of output bits $O_1$, $O_2$, to $O_b$ is considered as comprising a set of contiguous windows of output bits $w_1$ to $w_d$; and for each operation s-box $sb_k$ of the $sb_l$ to $sb_c$ primitive s-box operations:

the window of output bits $w_k$ comprises the output bit of that primitive s-box $sb_k$; and the input bits into the primitive s-box $sb_k$ comprise at least one bit from each of at least two windows of input bits other than window $w_k$.

41. A process as claimed in claim 22, when implemented on a general purpose processor.

42. A process as claimed in claim 41, in which the general purpose processor is word-based

43. A process as claimed in any claim 42, that uses binary masking to perform bitwise permutation operations which comprise at least one of: static bitwise permutation operations, key-dependent bitwise permutation operations and data-dependent bitwise permutation operations.

44. A process as claimed in claim 43, that uses binary masking to perform the bitwise permutation operations, those bitwise permutation operations used to achieve at least one of:

selecting the members of the sets $s_1$, $s_2$ to $s_c$; permuting the outputs of the c Boolean functions;

where the binary masking is used to perform at least one of the following:

static bitwise permutation operations; key-dependent bitwise permutation operations; and data-dependent bitwise permutation operations.

45. A process as claimed in claim 44, in which the bitwise permutation operations are hardware assisted.

46. A process as claimed in claim 45, in which the hardware assisted bitwise permutation operations are chosen from the group consisting of the Group Operation (GRP), its inverse, the omega-flip network (OMFLIP), PPERM, CROSS and BFLY operations.

**Patentansprüche**

1. Mehrfacheingangs-Mehrfachausgangs-S-Box, welche ausgelegt ist, um:

$a$ aufeinanderfolgend nummerierte Eingangsbits $I_1$, $I_2$, bis $I_a$ zu empfangen, worin a mindestens 4 ist, und um $b$ aufeinanderfolgend nummerierte Ausgangsbits $O_1$, $O_2$ bis $O_b$ auszugeben,

wobei die S-Box:

 $c$ S-Grund-Boxen $sb_1$, $sb_2$ bis $sb_c$ aufweist, von welchen jede:

  eine Mehrfacheingangs-Einfachausgangs-Boole'sche Funktion $f_1$, $f_2$ bis $f_c$ hat, die das Verhältnis zwischen den Mehrfacheingängen und dem Einfachausgang definiert; und
ausgelegt ist, einen entsprechenden Satz Eingangsbits $s_1$, $s_2$ bis $s_c$ zu empfangen, wobei jeder solche Satz aus den $a$ Eingangsbits zur S-Box ausgewählt ist und
entsprechend $sl_1$, $sl_2$ bis $sl_c$ Bits enthält, so dass:

   jede der Zahlen $sl_1$, $sl_2$ bis $sl_c$ im Bereich von 3 bis (a-1) liegt; und
die Summe der Zahlen $sl_1$, $sl_2$ bis $sl_c$ größer als a ist,

 und wobei die $b$ Ausgangsbits der S-Box die Ausgänge der $c$ Boole'schen Funktionen aufweisen.

**2.** Mehrfacheingangs-Mehrfachausgangs-S-Box nach einem der vorhergehenden Ansprüche, worin die $b$ Ausgangsbits der S-Box die Ausgänge der $c$ S-Grund-Boxen sind.

**3.** Mehrfacheingangs-Mehrfachausgangs-S-Box nach Anspruch 1, wobei $a$ zumindest 16 ist.

**4.** Mehrfacheingangs-Mehrfachausgangs-S-Box nach Anspruch 1, wobei $b$ zumindest 16 ist.

**5.** Mehrfacheingangs-Mehrfachausgangs-S-Box nach Anspruch 1, wobei $c$ im Bereich von 12 bis einschließlich $b$ ist.

**6.** Mehrfacheingangs-Mehrfachausgangs-S-Box nach Anspruch 1, wobei für jedes i und j von 1 bis a, jedes Paar Sätze $S_i$ und $S_j$ nicht mehr als min($sl_i$, $sl_j$)-1 Bits gemeinsam haben.

**7.** Mehrfacheingangs-Mehrfachausgangs-S-Box nach Anspruch 1, wobei mindestens zwei der Zahlen $sl_1$, $sl_2$ bis $sl_c$ gleich sind.

**8.** Mehrfacheingangs-Mehrfachausgangs-S-Box nach Anspruch 7, wobei alle Zahlen $sl_1$, $sl_2$ bis $sl_c$ gleich sind.

**9.** Mehrfacheingangs-Mehrfachausgangs-S-Box nach Anspruch 1, wobei jeder Satz $s_1$, $s_2$ bis $s_c$ der Eingangsbits unter Verwendung eines probalistischen Verfahrens ausgewählt ist.

**10.** Mehrfacheingangs-Mehrfachausgangs-S-Box nach Anspruch 1, wobei mindestens eine der Boole'schen Funktionen $f_1$, $f_2$ bis $f_c$ unter Verwendung eines probalistischen Verfahrens erzeugt wird.

**11.** Mehrfacheingangs-Mehrfachausgangs-S-Box nach Anspruch 1, wobei jede der Funktionen $f_1$, $f_2$ bis $f_c$ eine Zwei-zu-eins-Multiplexer-Funktion aufweist.

**12.** Mehrfacheingangs-Mehrfachausgangs-S-Box nach Anspruch 1, wobei jede der Funktionen $f_1$, $f_2$ bis $f_c$ eine einzigartige Boole'sche Funktion ist.

**13.** Mehrfacheingangs-Mehrfachausgangs-S-Box nach Anspruch 12, wobei die Differenz zwischen den Funktionen $f_1$, $f_2$ bis $f_c$ affin ist.

**14.** Mehrfacheingangs-Mehrfachausgangs-S-Box nach Anspruch 1, wobei für jedes i von (c-a) bis a:

 der Satz der $sl_i$-Eingangsbits zu jeder S-Grund-Box $sb_i$ ausgewählt ist aus den Eingangsbits $I_1$ bis $I_i$; und
das Verhältnis zwischen dem Eingangsbit $l_i$ und dem Ausgangsbit linear ist.

**15.** Mehrfacheingangs-Mehrfachausgangs-S-Box nach Anspruch 14, wobei ein Untersatz von $T=(a\text{-}c)$ Bits des Satzes der a Bits $I_1$ bis $I_a$, die die Bits $I_1$ bis $I_T$ sind, für eine bijektive $TxT$-Abbildung eingegeben werden.

**16.** Mehrfacheingangs-Mehrfachausgangs-S-Box nach Anspruch 1, wobei für jedes i von ($W$+1) bis $a$, worin $W$ eine Konstante ist:

der Satz von $sl_i$ Eingangsbits in die S-Grund-Box $sb_i$
ausgewählt ist aus den Eingangsbits $I_{(i-W)}$ bis $I_i$; und

das Verhältnis zwischen dem Eingangsbit $I_i$ und dem Ausgangsbit der S-Box $sb_i$ linear ist.

17. Mehrfacheingangs-Mehrfachausgangs-S-Box nach Anspruch 1, wobei bei der Auswahl des $sl_1$, $sl_2$ bis $sl_c$ Eingangs-bits der Sätze der entsprechenden Eingangsbits $S_i$, $S_2$ bis $S_c$:

im aufeinanderfolgend nummerierten Satz der Eingangsbits $I_1$, $I_2$ bis $I_a$ das Bit $I_a$ als aufeinanderfolgend mit dem Bit $I_1$ sowie mit dem Bit $I_{(a-1)}$ behandelt wird, so dass die Eingangsbits $I_1$, $I_2$ bis $I_a$ als eine kreisförmige Sammlung von Bits angesehen werden;
der aufeinanderfolgend nummerierte Satz der Eingangsbits $I_1$, $I_2$ bis $I_a$ als einen Satz von Fenstern von Bits $w_1$ bis $w_d$ umfassend angesehen wird, worin $d$ im Bereich von 3 bis ($c/3$) liegt, so dass:

jedes Fenster eine vordere und eine hintere Fenstergrenze hat, wobei jede der Grenzen schrittweise um eine Bit-Position in derselben Richtung zwischen den S-Grund-Boxen $sb_i$ und $sb_{i+1}$ zunimmt; und

im aufeinanderfolgend nummerierten Satz von Ausgangsbits $O_1$, $O_2$ bis $O_b$ das Bit $O_b$ als mit dem Bit $O_1$ sowie mit dem Bit $O_{b-1}$ aufeinanderfolgend behandelt wird, so dass die Ausgangsbits $O_1$, $O_2$ bis $O_b$ als kreisförmige Sammlung von Bits angesehen werden; und
für jede S-Grund-Box $sb_k$ im Satz $sb_1$ bis $sb_c$:

die Eingangsbits in die S-Grund-Box $sb_k$ mindestens ein Bit aus jedem der mindestens zwei Fenster der Eingangsbits, die nicht das Fenster $w_k$ sind, aufweisen.

18. Mehrfacheingangs-Mehrfachausgangs-S-Box nach Anspruch 17, wobei für jede S-Grund-Box $sb_i$ mindestens zwei der Fenster $w_1$ bis $w_d$ verschiedene Größen haben.

19. Mehrfacheingangs-Mehrfachausgangs-S-Box nach Anspruch 1, wobei bei der Auswahl der $sl_1$, $sl_2$ bis $sl_c$ der Eingangsbits der Sätze der entsprechenden Eingangsbits $s_1$, $s_2$ bis $s_c$:

im aufeinanderfolgend nummerierten Satz der Eingangsbits $I_1$, $I_2$ bis $I_a$ das Bit $I_a$ als mit dem Bit $I_1$ sowie mit dem Bit $I_{a-1}$ aufeinanderfolgend behandelt wird, so dass die Eingangsbits $I_1$, $I_2$ bis $I_a$ als eine kreisförmige Sammlung von Bits angesehen werden;
der aufeinanderfolgend nummerierte Satz der Eingangsbits $I_1$, $I_2$ bis $I_a$ als einen Satz von aufeinanderfolgenden Fenstern von Eingangsbits $w_1$ bis $w_d$ umfassend angesehen wird, worin d im Bereich von 2 bis (a/3) liegt;
im aufeinanderfolgend nummerierten Satz der Ausgangsbits $O_1$, $O_2$ bis $O_b$ das Bit $O_b$ als mit dem Bit $O_1$ sowie mit dem Bit $O_{(b-1)}$ aufeinanderfolgend behandelt wird, so dass die Ausgangsbits $O_1$, $O_2$ bis $O_b$ als kreisförmige Sammlung von Bits angesehen werden; und
der aufeinanderfolgend nummerierte Satz der Ausgangsbits $O_1$, $O_2$ bis $O_b$ als einen Satz von aufeinanderfol-genden Fenstern der Ausgangsbits $w_1$ bis $w_d$ umfassend angesehen wird; und für jede S-Grund-Box $sb_k$ der S-Grund-Boxen $sb_1$ bis $sb_c$:

das Fenster der Ausgangsbits $w_k$ das Ausgangsbit jener S-Grund-Box $sb_x$ aufweist; und
die Eingangsbits in jede S-Grund-Box $sb_k$ mindestens ein Bit von jedem der mindestens zwei Fenster der Eingangsbits, die nicht das Fenster $w_k$ sind, aufweisen.

20. Mehrfacheingangs-Mehrfachausgangs-S-Box nach Anspruch 1, wobei die Sätze der Eingangsbits $s_1$, $s_2$ bis $s_c$ in die $c$ S-Grund-Boxen $sb_1$ bis $sb_c$ mit einem heuristischen Verfahren ausgewählt werden, welches aufweist:

das probalistische Auswählen von c geordneten Sätzen $P_1$ bis $P_c$ von Index-Positionen für Eingangsbits, die aus a Bits genommen werden, wobei jeder Satz $P_1$ bis $P_c$ jeweils $sl_1$, $sl_2$ bis $sl_c$ Mitglieder hat;
für jeden der $c$ geordneten Sätze $P_1$ bis $P_c$ von Index-Positionen, wenn irgendwelche zwei solche Sätze dasselbe Mitglied in derselben Position enthalten, das Austauschen eines dieser Mitglieder gegen eine Index-Position, die aus einem anderen der Sätze $P_1$ bis $P_c$ probalistisch ausgewählt ist;
iterativ für jeden der $c$ Sätze $P_1$ bis $P_c$ von Index-Positionen:

Bestimmen der Anzahl von Mitgliedern, die der Satz mit jedem der anderen $P_1$ bis $P_c$ Sätze der Index-Positionen gemein hat;

für alle zwei Mitglieder $P_i$ und $P_k$ der $c$ Sätze $P_1$ bis $P_c$ der Index-Positonen, die eine beliebige Anzahl t von Mitgliedern gemein haben, Umordnen von $(t+1)/2$ Mitgliedern von $P_i$ durch:

Sortieren der verbleibenden (c-2)Sätze der c Sätze $P_1$ bis $P_c$ in der Reihenfolge der Anzahl der Mitglieder, die sie mit $P_i$ gemein haben;

Wählen eines Satzes $P_m$ aus den (c-2) Sätzen, der die Mindestanzahl seiner Mitglieder mit $P_i$ gemein hat;

Auswählen eines Mitglieds, das den Sätzen $P_i$ und $P_k$ gemein ist; und

Austauschen dieses ausgewählten Mitglieds gegen eines der Mitglieder des Satzes $P_m$.

21. Schaltkreis mit einer Rundfunktion ("round function") von einer Blockchiffre, einer Stromchiffre, einer Pseudo-Zufallszahlengenerator- oder Hash-Funktion, wobei der kryptographische Schaltkreis mindestens eine Mehrfacheingangs-Mehrfachausgangs-Substitutions-Box nach Anspruch 1 aufweist, in welchem Schaltkreis eine lückenlose arithmetische Übertragslogik-Kette (carry-logic chain) vom Bereich Null bis einschließlich 6 Übertrags-Operationen zwischen dem Eingang und dem Ausgang der mindestens einen Mehrfacheingangs-Mehrfachausgangs-S-Box vorliegt.

22. Kryptographisches Verfahren, welches

a aufeinanderfolgend nummerierte Eingangsbits $I_1$, $I_2$ bis $I_a$ erhält, worin a mindestens 4 ist, und

b aufeinanderfolgend nummerierte Ausgangsbits $O_1$, $O_2$ bis $O_b$ ausgibt,

welches Verfahren umfasst:

c S-Grund-Box-Operationen $sb_1$, $sb_2$ bis $sb_c$, von welchen jede: eine Mehrfacheingangs-Einfachausgangs-Boole'sche Funktion $f_1$, $f_2$ bis $f_c$ hat, die das Verhältnis zwischen den Mehrfacheingängen und dem Einfachausgang festlegt;

und

einen entsprechenden Satz von Eingangsbits $S_1$, $S_2$ bis $S_c$ erhält, wobei jeder solche Satz ausgewählt ist aus den a Eingangsbits zum kryptographischen Verfahren und jeweils $sl_1$, $sl_2$ bis $sl_c$ Bits enthält, so dass:

jede der Zahlen $sl_1$, $sl_2$ bis $sl_c$ im Bereich von 3 bis (a-1) liegt; und

die Summe der Zahlen $sl_1$, $sl_2$ bis $sl_c$ größer als a ist,

und worin die b Ausgangsbits des kryptographischen Verfahrens die Ausgänge der $c$ Boole'schen Funktionen umfassen.

23. Kryptographisches Verfahren nach Anspruch 22, wobei die b Ausgangsbits der S-Box die Ausgänge der c S-Grund-Box-Operationen sind.

24. Kryptographisches Verfahren nach Anspruch 22, wobei a mindestens 16 ist.

25. Kryptographisches Verfahren nach Anspruch 22, wobei b mindestens 16 ist.

26. Kryptographisches Verfahren nach Anspruch 22, wobei c im Bereich von 12 bis einschließlich b liegt.

27. Kryptographisches Verfahren nach Anspruch 22, wobei für jedes $i$ und $j$ von 1 bis $a$, jedes Paar Sätze $s_i$ und $s_j$ nicht mehr als $\min(sl_i, sl_j)$-1 Bits gemein haben.

28. Kryptographisches Verfahren nach Anspruch 22, wobei mindestens zwei der Zahlen $sl_1$, $sl_2$ bis $sl_c$ gleich sind.

29. Kryptographisches Verfahren nach Anspruch 28, wobei alle Zahlen $sl_1$, $sl_2$ bis $sl_c$ gleich sind.

30. Kryptographisches Verfahren nach Anspruch 22, wobei jeder Satz $s_1$, $s_2$ bis $s_c$ der Eingangsbits unter Verwendung eines probalistischen Verfahrens ausgewählt ist.

31. Kryptographisches Verfahren nach Anspruch 22, wobei mindestens eine der Boole'schen Funktionen $f_1$, $f_2$ bis $f_c$ unter Verwendung eines probalistischen Verfahrens erstellt wird.

**32.** Kryptographisches Verfahren nach Anspruch 22, wobei jede der Funktionen $f_1$, $f_2$ bis $f_c$ eine Zwei-zu-eins-Multiplexer-Funktion aufweist.

**33.** Kryptographisches Verfahren nach Anspruch 22, wobei jede der Funktionen $f_1$, $f_2$ bis $f_c$ eine einzigartige Boole'sche Funktion ist.

**34.** Kryptographisches Verfahren nach Anspruch 22, wobei die Differenz zwischen den Funktionen $f_1$, $f_2$ bis $f_c$ affin ist.

**35.** Kryptographisches Verfahren nach Anspruch 22, wobei für jedes $i$ von $(c\text{-}a)$ bis $a$:

der Satz der $sl_i$-Eingangsbits für jede S-Grund-Box-Operation $sb_i$ ausgewählt ist aus den Eingangsbits $I_1$ bis $I_i$; und
das Verhältnis zwischen dem Eingangsbit $I_i$ und dem Ausgangsbit linear ist.

**36.** Kryptographisches Verfahren nach Anspruch 35, wobei ein Untersatz von $T=(a\text{-}c)$ Bits des Satzes der a Bits $I_1$ bis $I_a$, die die Bits $I_1$ bis $I_T$ sind, für eine bijektive $T\mathrm{x}T$-Abbildung eingegeben werden.

**37.** Kryptographisches Verfahren nach Anspruch 22, wobei für jedes i von (W+1) bis a, worin $W$ eine Konstante ist:

der Satz von $sl_i$ Eingangsbits für die S-Grund-Box-Operation
$sb_i$ ausgewählt ist aus den Eingangsbits $I_{(i\text{-}W)}$ bis $I_i$; und das Verhältnis zwischen dem Eingangsbit $I_i$ und dem Ausgangsbit der S-Box $sb_i$ linear ist.

**38.** Kryptographisches Verfahren nach Anspruch 22, wobei bei der Auswahl des $sl_1$, $sl_2$ bis $sl_c$ der Eingangsbits der Sätze der Eingangsbits $s_1$, $s_2$ bis $s_c$ jeweils:

im aufeinanderfolgend nummerierten Satz der Eingangsbits $I_1$, $I_2$ bis $I_a$ das Bit $I_a$ als aufeinanderfolgend mit dem Bit $I_1$ sowie mit dem Bit $I_{(a\text{-}1)}$ behandelt wird, so dass die Eingangsbits $I_1$, $I_2$ bis $I_a$ als eine kreisförmige Sammlung von Bits angesehen werden;
im aufeinanderfolgend nummerierte Satz der Eingangsbits $I_1$, $I_2$ bis $I_a$ als einen Satz von Fenstern der Bits $w_1$ bis $w_d$ umfassend angesehen wird, worin d im Bereich von 3 bis (c/3) liegt, so dass:

jedes Fenster eine vordere und eine hintere Fenstergrenze hat, wobei jede der Grenzen schrittweise um eine Bit-Position in derselben Richtung zwischen den S-Grund-Box-Operationen $sb_i$ und $sb_{i+1}$ zunimmt; und

der aufeinanderfolgend nummerierte Satz der Ausgangsbits $O_1$, $O_2$ bis $O_b$ das Bit $O_b$ als mit dem Bit $O_1$ sowie mit dem Bit $O_{b\text{-}1}$ aufeinanderfolgend behandelt wird, so dass die Ausgangsbits $O_1$, $O_2$ bis $O_b$ als kreisförmige Sammlung von Bits angesehen werden; und
für jede S-Grund-Box-Operation $sb_k$ im Satz $sb_1$ bis $sb_c$:

die Eingangsbits in die S-Grund-Box-Operation $sb_k$ mindestens ein Bit aus jedem der mindestens zwei Fenster der Eingangsbits, die nicht das Fenster $w_k$ sind, aufweisen.

**39.** Kryptographisches Verfahren nach Anspruch 38, wobei für jede S-Grund-Box-Operation $sb_i$ mindestens zwei der Fenster $w_1$ bis $w_d$ verschiedene Größen haben.

**40.** Kryptographisches Verfahren nach Anspruch 22, wobei bei der Auswahl der $sl_1$, $sl_2$ bis $sl_c$ der Eingangsbits der Sätze der Eingangsbits $s_1$, $s_2$ bis $s_c$ jeweils :

im aufeinanderfolgend nummerierten Satz der Eingangsbits $I_1$, $I_2$ bis $I_a$, das Bit $I_a$ als mit dem Bit $I_1$ sowie mit dem Bit $I_{a\text{-}1}$ aufeinanderfolgend behandelt wird, so dass die Eingangsbits $I_1$, $I_2$ bis $I_a$ als eine kreisförmige Sammlung von Bits angesehen werden;
der aufeinanderfolgend nummerierte Satz der Eingangsbits $I_1$, $I_2$ bis $I_a$ als einen Satz von aufeinanderfolgenden Fenstern der Eingangsbits $w_1$ bis $w_d$ umfassend angesehen wird, worin d im Bereich von 2 bis (a/3) liegt;
im aufeinanderfolgend nummerierten Satz der Ausgangsbits $O_1$, $O_2$ bis $O_b$ das Bit $O_b$ als mit dem Bit $O_1$ sowie mit dem Bit $O_{(b\text{-}1)}$ aufeinanderfolgend behandelt wird, so dass die Ausgangsbits $O_1$, $O_2$ bis $O_b$ als kreisförmige Sammlung von Bits angesehen werden; und
der aufeinanderfolgend nummerierte Satz der Ausgangsbits $O_1$, $O_2$ bis $O_b$ als einen Satz von aufeinanderfol-

genden Fenstern der Ausgangsbits $w_l$ bis $w_d$ umfassend angesehen wird; und für jede S-Grund-Box-Operation $sb_k$ der S-Grund-Boxen $sb_1$ bis $sb_c$:

das Fenster der Ausgangsbits $w_k$ das Ausgangsbit jener einfachen S-Box $sb_k$ aufweist; und die Eingangsbits in jede S-Grund-Box $sb_k$ mindestens ein Bit von jedem der mindestens zwei Fenster der Eingangsbits, die nicht das Fenster $w_k$ sind, aufweisen.

**41.** Verfahren nach Anspruch 22, wenn es in einem Prozessor für allgemeine Zwecke implementiert ist.

**42.** Verfahren nach Anspruch 41, bei welchem der Prozessor für allgemeine Zwecke auf Word basiert.

**43.** Verfahren nach Anspruch 42, welches binäre Maskierung benützt, um bitweise Permutations-Operationen durchzuführen, welche mindestens eines von: statischen bitweisen Permutations-Operationen, schlüsselabhängigen bitweisen Permuationsoperationen und datenabhängigen bitweisen Permuations-Operationen umfassen.

**44.** Verfahren nach Anspruch 43, welches eine binäre Maskierung benützt, um die bitweisen Permuations-Operationen durchzuführen, welche bitweisen Permutations-Operationen verwendet werden, um mindestens eines von:

Auswählen der Mitglieder der Sätze $s_1$, $s_2$ bis $s_c$;
Permutieren der Ausgänge der $c$ Boole'schen Funktionen zu erreichen;

wobei die binäre Maskierung benützt wird, um mindestens eines von Folgendem durchzuführen:

statische bitweise Permutations-Operationen;
schlüsselabhängige bitweise Permuationsoperationen; und
datenabhängige bitweise Permuations-Operationen.

**45.** Verfahren nach Anspruch 44, wobei die bitweisen Permutations-Operationen Hardware-gestützt sind.

**46.** Verfahren nach Anspruch 45, bei welchem die Hardwaregestützten bitweisen Permutations-Operationen ausgewählt sind aus der Gruppe bestehend aus Group Operation (GRP), dem Inversen davon, dem Omega-Flip-Network (OMFLIP), PPERM, CROSS und BFLY-Operationen.

**Revendications**

**1.** Table de substitution à plusieurs entrées et à plusieurs sorties qui est à même de :

recevoir a bits d'entrée à numérotation contiguë $I_1$, $I_2$ à $I_a$, où a est au moins 4, et
fournir en sortie b bits de sortie à numérotation contiguë $O_1$, $O_2$ à $O_b$,
la table de substitution comprenant :
c tables de substitution primitives $sb_1$, $sb_2$ à $sb_c$, dont chacune :

comporte une fonction booléenne à plusieurs entrées et à sortie unique $f_1$, $f_2$ à $f_c$ définissant la relation entre les plusieurs entrées et la sortie unique, et
est à même de recevoir un ensemble de bits d'entrée $s_1$, $s_2$ à $s_c$, respectivement, chaque ensemble de ce type étant choisi parmi les a bits d'entrée fournis à la table de substitution et contenant $sl_1$, $sl_2$ à $sl_c$ bits, respectivement, de sorte que :

chacun des numéros $sl_1$, $sl_2$ à $sl_c$ se trouve dans l'intervalle compris entre 3 et (a-1), et
la somme des numéros $sl_1$, $sl_2$ à $sl_c$ est supérieure à a,
et dans laquelle les b bits de sortie de la table de substitution comprennent les sorties des c fonctions booléennes.

**2.** Table de substitution à plusieurs entrées et à plusieurs sorties suivant l'un quelconque des revendications précédentes, dans laquelle les b bits de sortie de la table de substitution sont les sorties des c tables de substitution primitives.

**3.** Table de substitution à plusieurs entrées et à plusieurs sorties suivant la revendication 1, dans laquelle a est au moins 16.

**4.** Table de substitution à plusieurs entrées et à plusieurs sorties suivant la revendication 1, dans laquelle b est au moins 16.

**5.** Table de substitution à plusieurs entrées et à plusieurs sorties suivant la revendication 1, dans laquelle c se trouve dans l'intervalle compris entre 12 et b inclus.

**6.** Table de substitution à plusieurs entrées et à plusieurs sorties suivant la revendication 1, dans laquelle pour chaque i et j compris entre 1 et a, chaque paire d'ensembles $s_i$ et $s_j$ n'a pas plus de min($sl_i$, $sl_j$)-1 bits en commun.

**7.** Table de substitution à plusieurs entrées et à plusieurs sorties suivant la revendication 1, dans laquelle au moins deux des numéros $sl_1$, $sl_2$ à $sl_c$ sont identiques.

**8.** Table de substitution à plusieurs entrées et à plusieurs sorties suivant la revendication 7, dans laquelle la totalité des numéros $sl_1$, $sl_2$ à $sl_c$ sont identiques.

**9.** Table de substitution à plusieurs entrées et à plusieurs sorties suivant la revendication 1, dans laquelle chaque ensemble $s_1$, $s_2$ à $s_c$ de bits d'entrée est choisi en utilisant un procédé probabiliste.

**10.** Table de substitution à plusieurs entrées et à plusieurs sorties suivant la revendication 1, dans laquelle au moins une des fonctions booléennes $f_1$, $f_2$ à $f_c$ est générée en utilisant un procédé probabiliste.

**11.** Table de substitution à plusieurs entrées et à plusieurs sorties suivant la revendication 1, dans laquelle chacune des fonctions $f_1$, $f_2$ à $f_c$ comprend une fonction de multiplexage deux à un.

**12.** Table de substitution à plusieurs entrées et à plusieurs sorties suivant la revendication 1, dans laquelle chacune des fonctions $f_1$, $f_2$ à $f_c$ est une fonction booléenne unique.

**13.** Table de substitution à plusieurs entrées et à plusieurs sorties suivant la revendication 12, dans laquelle la différence entre les fonctions $f_1$, $f_2$ à $f_c$ est affine.

**14.** Table de substitution à plusieurs entrées et à plusieurs sorties suivant la revendication 1, dans laquelle pour chaque i compris entre (c-a) et a :

l'ensemble de $sl_i$ bits d'entrée fournis à chaque table de substitution primitive $sb_i$ est choisi parmi les bits d'entrée $I_1$ à $I_i$, et
la relation entre le bit d'entrée $I_i$ et le bit de sortie est linéaire.

**15.** Table de substitution à plusieurs entrées et à plusieurs sorties suivant la revendication 14, dans laquelle un sous-ensemble de T=(a-c) bits de l'ensemble de a bits $I_i$ à $I_a$, à savoir les bits $I_i$ à $I_T$, sont fournis en entrée à une application bijective TxT.

**16.** Table de substitution à plusieurs entrées et à plusieurs sorties suivant la revendication 1, dans laquelle pour chaque i compris entre (W+1) et a, où W est une constante :

l'ensemble de $sl_i$ bits d'entrée fournis à la table de substitution primitive $sb_i$ est choisi parmi les bits d'entrée $I_{(i-w)}$ à $I_i$, et
la relation entre le bit d'entrée $I_i$ et le bit de sortie de la table de substitution $sb_i$ est linéaire.

**17.** Table de substitution à plusieurs entrées et à plusieurs sorties suivant la revendication 1, dans laquelle lors de la sélection des numéros $sl_1$, $sl_2$ à $sl_c$ des bits d'entrée des ensembles de bits d'entrée $s_1$, $s_2$ à $s_c$, respectivement :

dans l'ensemble à numérotation contiguë de bits d'entrée $I_1$, $I_2$ à $I_a$, le bit $I_a$ est traité comme étant contigu au bit $I_1$ ainsi qu'au bit $I_{(a-1)}$ de sorte que les bits d'entrée $I_1$, $I_2$ à $I_a$ sont considérés comme étant un groupe circulaire de bits ;
l'ensemble à numérotation contiguë de bits d'entrée $I_1$, $I_2$ à $I_a$ est considéré comme comprenant un ensemble de fenêtres de bits $w_1$ à $w_d$, où d se trouve dans l'intervalle compris entre 3 et (c/3) de sorte que :
chaque fenêtre comporte des limites de fenêtre avant et arrière, chacune des limites étant incrémentée d'une position binaire dans le même sens entre des tables de substitution primitives $sb_i$ et $sb_{i+1}$, et
dans l'ensemble à numérotation contiguë de bits de sortie $O_1$, $O_2$ à $O_b$, le bit $O_b$ est traité comme étant contigu au bit $O_1$ ainsi qu'au bit $O_{b-1}$ de sorte que les bits de sortie $O_1$, $O_2$ à $O_b$ sont considérés comme étant un groupe circulaire de bits, et
pour chaque table de substitution primitive $sb_k$ dans l'ensemble $sb_1$ à $sb_c$ :

les bits d'entrée dans la table de substitution primitive $sb_k$ comprennent au moins un bit venant de chacune des au moins deux fenêtres de bits d'entrée autres que la fenêtre $w_k$.

**18.** Table de substitution à plusieurs entrées et à plusieurs sorties suivant la revendication 17, dans laquelle pour chaque table de substitution primitive $sb_i$ au moins deux des fenêtres $w_1$ à $w_d$ sont de tailles différentes.

**19.** Table de substitution à plusieurs entrées et à plusieurs sorties suivant la revendication 1, dans laquelle lors de la sélection des numéros $sl_1$, $sl_2$ à $sl_c$ des bits d'entrée des ensembles de bits d'entrée $s_1$, $s_2$ à $s_c$, respectivement :

dans l'ensemble à numérotation contiguë de bits d'entrée $I_1$, $I_2$ à $I_a$, le bit $I_a$ est traité comme étant contigu au bit $I_1$ ainsi qu'au bit $I_{a-1}$ de sorte que les bits d'entrée $I_1$, $I_2$ à $I_a$ sont considérés comme étant un groupe circulaire de bits ;
l'ensemble à numérotation contiguë de bits d'entrée $I_1$, $I_2$ à $I_a$ est considéré comme comprenant un ensemble de fenêtres contiguës de bits d'entrée $w_1$ à $w_d$, où d se trouve dans l'intervalle compris entre 2 et (a/3);
dans l'ensemble à numérotation contiguë de bits de sortie $O_1$, $O_2$ à $O_b$, le bit $O_b$ est traité comme étant contigu au bit $O_1$ ainsi qu'au bit $O_{(b-1)}$ de sorte que les bits de sortie $O_1$, $O_2$ à $O_b$ sont considérés comme étant un groupe circulaire de bits, et
l'ensemble à numérotation contiguë de bits de sortie $O_1$, $O_2$ à $O_b$ est considéré comme comprenant un ensemble de fenêtres contiguës de bits de sortie $w_1$ à $w_d$, et
pour chaque table de substitution primitive $sb_k$ des tables de substitution primitives $sb_1$ à $sb_c$ :

la fenêtre de bits de sortie $w_k$ comprend le bit de sortie de cette table de substitution primitive $sb_k$, et
les bits d'entrée dans la table de substitution primitive $sb_k$ comprennent au moins un bit venant de chacune d'au moins deux fenêtres de bits d'entrée autres que la fenêtre $w_k$.

**20.** Table de substitution à plusieurs entrées et à plusieurs sorties suivant l'une quelconque des revendications précédentes, dans laquelle les ensembles de bits d'entrée $s_1$, $s_2$ à $s_c$ fournis aux tables de substitution primitives $sb_1$ à $sb_c$ sont choisis selon un procédé heuristique comprenant :

la sélection selon un procédé probabiliste de c ensembles ordonnés $P_1$ à $P_c$ de positions indicielles pour des bits d'entrée tirés de a bits, chaque ensemble $P_1$ à $P_c$ contenant respectivement $sl_1$, $sl_2$ à $sl_c$ membres ;
pour chacun des c ensembles ordonnés $P_1$ à $P_c$ de positions indicielles, si deux ensembles quelconques de ce type contiennent le même membre dans la même position, permuter un de ces membres ayant une position indicielle qui est choisie selon un procédé probabiliste parmi un autre des ensembles $P_1$ à $P_c$;
itérativement pour chacun des c ensembles $P_1$ à $P_c$ de positions indicielles :

déterminer le nombre de membres que l'ensemble a en commun avec chacun des autres $P_1$ à $P_c$ ensembles de positions indicielles ;
pour chacun des deux membres $P_i$ et $P_k$ des c ensembles $P_1$ à $P_c$ de positions indicielles qui ont un nombre arbitraire t de membres en commun,
réorganiser (t + l)/2 membres de $P_i$ en :

triant les (c-2) ensembles restants des c ensembles $P_1$ à $P_c$ dans l'ordre du nombre de membres qu'ils ont en commun avec $P_i$;
choisissant un ensemble $P_m$ parmi les (c-2) ensembles qui a le nombre minimum de ses membres en commun avec $P_i$;
sélectionnant un membre qui est commun aux ensembles $P_i$ et $P_k$,
et
permutant ce membre sélectionné avec un des membres de l'ensemble $P_m$.

**21.** Circuit comprenant une fonction d'arrondi d'un chiffrement par blocs, d'un chiffrement continu, d'un générateur de nombre pseudo-aléatoire ou d'une fonction de hachage, le circuit cryptographique comprenant au moins une table de substitution à plusieurs entrées et à plusieurs sorties suivant la revendication 1, circuit dans lequel se trouve une chaîne à logique de report arithmétique ininterrompue dans l'intervalle compris entre zéro et jusqu'à 6 opérations incluses entre l'entrée et la sortie de la au moins une table de substitution à plusieurs entrées et à plusieurs sorties.

**22.** Procédé cryptographique qui :

reçoit a bits d'entrée à numérotation contiguë $I_1$, $I_2$ à $I_a$, où a est au moins 4,
et
fournit en sortie b bits de sortie à numérotation contiguë $O_1$, $O_2$ à $O_b$,
le procédé comprenant :
c opérations par table de substitution primitive $sb_1$, $sb_2$ à $sb_c$, dont chacune :

comporte une fonction booléenne à plusieurs entrées à sortie unique $f_1$, $f_2$ à $f_c$ définissant la relation entre les plusieurs entrées et la sortie unique, et
reçoit un ensemble de bits d'entrée $s_1$, $s_2$ à $s_c$, respectivement, chaque ensemble de ce type étant choisi parmi les a bits d'entrée fournis au procédé cryptographique et contenant $sl_1$, $sl_2$ à $sl_c$ bits, respectivement, de sorte que :

chacun des numéros $sl_1$, $sl_2$ à $sl_c$ se trouve dans l'intervalle compris entre 3 et (a-1), et
la somme des numéros $sl_1$, $sl_2$ à $sl_c$ est supérieure à a,
et dans laquelle les b bits de sortie du procédé cryptographique comprennent les sorties des c fonctions booléennes.

**23.** Procédé cryptographique suivant la revendication 22, dans lequel les b bits de sortie de la table de substitution sont les sorties des c opérations par table de substitution primitive.

**24.** Procédé cryptographique suivant la revendication 22, dans lequel a est au moins 16.

**25.** Procédé cryptographique suivant la revendication 22, dans lequel b est au moins 16.

**26.** Procédé cryptographique suivant la revendication 22, dans lequel c se trouve dans l'intervalle compris entre 12 et b inclus.

**27.** Procédé cryptographique suivant la revendication 22, dans lequel pour chaque i et j compris entre 1 et a, chaque paire d'ensembles $s_i$ et $s_j$ n'a pas plus de $\min(sl_i, sl_j)-1$ bits en commun.

**28.** Procédé cryptographique suivant la revendication 22, dans lequel au moins deux des numéros $sl_1$, $sl_2$ à $sl_c$ sont identiques.

**29.** Procédé cryptographique suivant la revendication 28, dans lequel la totalité des numéros $sl_1$, $sl_2$ à $sl_c$ sont identiques.

**30.** Procédé cryptographique suivant la revendication 22, dans lequel chaque ensemble $s_1$, $s_2$ à $s_c$ de bits d'entrée est choisi en utilisant un procédé probabiliste.

**31.** Procédé cryptographique suivant la revendication 22, dans lequel au moins une des fonctions booléennes $f_1$, $f_2$ à $f_c$ est générée en utilisant un procédé probabiliste.

**32.** Procédé cryptographique suivant la revendication 22, dans lequel chacune des fonctions $f_1$, $f_2$ à $f_c$ comprend une fonction de multiplexage deux vers un.

**33.** Procédé cryptographique suivant la revendication 22, dans lequel chacune des fonctions $f_1$, $f_2$ à $f_c$ est une fonction booléenne unique.

**34.** Procédé cryptographique suivant la revendication 22, dans lequel la différence entre les fonctions $f_1$, $f_2$ à $f_c$ est affine.

**35.** Procédé cryptographique suivant la revendication 22, dans lequel pour chaque i entre (c-a) et a :

l'ensemble de $sl_i$ bits d'entrée fournis à chaque opération par table de substitution primitive $sb_i$ est choisi parmi les bits d'entrée $I_1$ à $I_i$, et
la relation entre le bit d'entrée $I_i$ et le bit de sortie est linéaire.

36. Procédé cryptographique suivant la revendication 35, dans lequel un sous-ensemble de $T=(a-c)$ bits de l'ensemble de a bits $I_1$ à $I_a$, à savoir les bits $I_1$ à $I_T$, sont fournis en entrée à une application bijective TxT.

37. Procédé cryptographique suivant la revendication 22, dans lequel pour chaque i compris entre $(W+1)$ et a, où W est une constante :

l'ensemble de $sl_i$ bits d'entrée fournis à l'opération par table de substitution primitive $sb_i$ est choisi parmi les bits d'entrée $I_{(i-w)}$ à $I_i$, et
la relation entre le bit d'entrée $I_i$ et le bit de sortie de la table de substitution $sb_i$ est linéaire.

38. Procédé cryptographique suivant la revendication 22, dans lequel lors de la sélection des numéros $sl_1$, $sl_2$ à $sl_c$ des bits d'entrée des ensembles de bits d'entrée $s_1$, $s_2$ à $s_c$, respectivement :

dans l'ensemble à numérotation contiguë de bits d'entrée $I_1$, $I_2$ à $I_a$, le bit $I_a$ est traité comme étant contigu au bit $I_1$ ainsi qu'au bit $I_{(a-1)}$ de sorte que les bits d'entrée $I_1$, $I_2$ à $I_a$ sont considérés comme étant un groupe circulaire de bits ;
l'ensemble à numérotation contiguë de bits d'entrée $I_1$, $I_2$ à $I_a$ est considéré comme comprenant un ensemble de fenêtres de bits $w_1$ à $w_d$, où d se trouve dans l'intervalle compris entre 3 et $(c/3)$ de sorte que :

chaque fenêtre comporte des limites de fenêtre avant et arrière, chacune des limites étant incrémentée d'une position binaire dans le même sens entre des opérations par table de substitution primitive $sb_i$ et $sb_{i+1}$, et
dans l'ensemble à numérotation contiguë de bits de sortie $O_1$, $O_2$ à $O_b$, le bit $O_b$ est traité comme étant contigu au bit $O_1$ ainsi qu'au bit $O_{b-1}$ de sorte que les bits de sortie $O_1$, $O_2$ à $O_b$ sont considérés comme étant un groupe circulaire de bits, et
pour chaque opération par table de substitution primitive $sb_k$ dans l'ensemble $sb_1$ à $sb_c$ :

les bits d'entrée dans l'opération par table de substitution primitive $sb_k$ comprennent au moins un bit venant de chacune des au moins deux fenêtres de bits d'entrée autres que la fenêtre $w_k$.

39. Procédé cryptographique suivant la revendication 38, dans lequel pour chaque opération par table de substitution primitive $sb_i$ au moins deux des fenêtres $w_1$ à $w_d$ sont de tailles différentes.

40. Procédé cryptographique suivant la revendication 22, dans lequel lors de la sélection des numéros $sl_1$, $sl_2$ à $sl_c$ des bits d'entrée des ensembles de bits d'entrée $s_1$, $s_2$ à $s_c$, respectivement :

dans l'ensemble à numérotation contiguë de bits d'entrée $I_1$, $I_2$ à $I_a$, le bit $I_a$ est traité comme étant contigu au bit $I_1$ ainsi qu'au bit $I_{a-1}$ de sorte que les bits d'entrée $I_1$, $I_2$ à $I_a$ sont considérés comme étant un groupe circulaire de bits ;
l'ensemble à numérotation contiguë de bits d'entrée $I_1$, $I_2$ à $I_a$ est considéré comme comprenant un ensemble de fenêtres contiguës de bits d'entrée $w_1$ à $w_d$, où d se trouve dans l'intervalle compris entre 2 et $(a/3)$;
dans l'ensemble à numérotation contiguë de bits de sortie $O_1$, $O_2$ à $O_b$, le bit $O_b$ est traité comme étant contigu au bit $O_1$ ainsi qu'au bit $O_{(b-1)}$ de sorte que les bits de sortie $O_1$, $O_2$ à $O_b$ sont considérés comme étant un groupe circulaire de bits, et
l'ensemble à numérotation contiguë de bits de sortie $O_1$, $O_2$ à $O_b$ est considéré comme comprenant un ensemble de fenêtres contiguës de bits de sortie $w_1$ à $w_d$, et
pour chaque table de substitution primitive $sb_k$ des opérations par table de substitution primitive $sb_1$ à $sb_c$ :
la fenêtre de bits de sortie $w_k$ comprend le bit de sortie de cette table de substitution primitive $sb_k$, et
les bits d'entrée dans la table de substitution primitive $sb_k$ comprennent au moins un bit venant de chacune d'au moins deux fenêtres de bits d'entrée autres que la fenêtre $w_k$.

41. Procédé suivant la revendication 22, lorsqu'il est mis en oeuvre sur un processeur universel.

42. Procédé suivant la revendication 41, dans lequel le processeur universel est basé sur des mots.

**43.** Procédé suivant la revendication 42, qui utilise un masquage binaire pour exécuter des opérations de permutation par bits qui comprennent au moins une des opérations suivantes : des opérations de permutation par bits statiques, des opérations de permutation par bits en fonction d'une clé et des opérations de permutation par bits en fonction de données.

**44.** Procédé suivant la revendication 43, qui utilise un masquage binaire pour exécuter les opérations de permutation par bits, ces opérations de permutation par bits étant utilisées pour effectuer au moins une des actions suivantes :

la sélection des membres des ensembles $s_1$, $s_2$ à $s_c$;
la permutation des sorties des c fonctions booléennes;
où le masquage binaire est utilisé pour effectuer au moins une des actions suivantes :

des opérations de permutation par bits statiques;
des opérations de permutation par bits en fonction d'une clé, et
des opérations de permutation par bits en fonction de données.

**45.** Procédé suivant la revendication 44, dans lequel les opérations de permutation par bits sont assistées par matériel.

**46.** Procédé suivant la revendication 45, dans lequel les opérations de permutation par bits assistées par matériel sont choisies parmi le groupe comprenant l'opération de groupe (GRP), son inverse, le réseau OMFLIP (omega-flip) et des opérations PPERM, CROSS et BFLY.

FIGURE 1

FIGURE 2

FIGURE 3

EP 1 820 295 B1

FIGURE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2004905507
- AU 2004906543
- AU 2004907361
- AU 2004907374
- AU 2005902136
- US 3798359 A, Feistel
- US 3958081 A, Ehrsam
- US 4255811 A, Adler
- US 4982429 A, Takaragi
- US 5103479 A, Takaragi
- US 4275265 A, Davida

- US 5796837 A, Kim
- US 6031911 A, Adams
- US 4157454 A, Becker
- US 4888798 A, Earnest
- US 5168521 A, Delaporte
- AU 2004905897
- AU 2004906364
- AU 2005900087
- AU IB2005001499 W
- AU IB2005001487 W
- AU IB2005001475 W

**Non-patent literature cited in the description**

- Cryptography and Computer Privacy. *Scientific American,* May 1973, vol. 228
- **JOHN B. KAM ; GEORGE I. DAVIDA.** Structured Design of Substitution-Permutation Encryption Networks. *IEEE Transactions on Computers,* 1979, vol. 28 (10), 747
- **J. GORDON ; H. RETKIN.** *Are Big S-Boxes Best,* 1982
- **F. AYOUB.** Probabilistic completeness of substitution-permutation encryption networks. *IEEE Proceedings,* 1982, vol. 129 (5), 195-199
- **A. F. WEBSTER ; S. E. TAVARES.** *Department of Electrical Engineering, Queen's University, Kingston, Ont. Canada,* 1986, 523-534
- Nonlinearity Criteria for Cryptographic Functions. *Advances in Cryptology-EUROCRYPT,* 1989, vol. 89, 549-562
- **CARLISLE M. ADAMS.** On immunity against Biham and Shamir's Differential Cryptanalysis. *Information Processing Letters,* 14 February 1992, vol. 41, 77-80

- **RUBY B. LEE ; Z. J. SHI ; Y.L. YIN ; RONALD L. RIVEST ; M. J. B. ROBSHAW ; R.B LEE.** PPERM and CROSS operations described in the paper 'Efficient permutation instructions for fast software cryptography. *IEEE Micro,* December 2001, vol. 21 (6), 56-69
- **Z. SHI.** Proceedings of the 15th International Conference on Application-Specific Systems. *Architectures and Processors,* June 2003, 237-247
- **VIJAY V. VAZIRANI.** Approximation Algorithms. Springer-Verlag, 2001
- **D.S. HOCHBAUM.** Approximation Algorithms for NP-hard Problems. PWS Publishing Co, 1996
- **W.S. FORSYTH ; R. SAFAVI-NAINI.** Automated Cryptanalysis of Substitution Ciphers. *Cryptologia,* 1993, vol. XVII (4), 407-418
- **J.P. GIDDY ; R. SAFAVI-NAINI.** Automated Cryptanalysis of Transposition Ciphers. *The Computer Journal,* 1994, vol. XVII (4
- Two-Stage Optimisation in the Design of Boolean Functions. **JOHN ANDREW CLARK ; JEREMY JACOB.** Lecture Notes in Computer Science. Springer, 2000, vol. 1841, 242-254